# EUROPÄISCHE PATENTSCHRIFT

(11) **EP 0 557 777 B1**
(45) Veröffentlichungstag und Bekanntmachung des Hinweises auf die Patenterteilung: **09.12.1998**
(21) Anmeldenummer: 93101956.6
(22) Anmeldetag: 08.02.1993
(51) Int. Cl.: H04M 3/48

(54) **Programmgesteuerte Telekommunikationsanlage mit der Möglichkeit des automatischen Rückrufs**
Program-controlled telecommunication-system with the option of automatic call-back
Système de télécommunication commandé par programme avec option de rappel automatique

(30) Priorität: 28.02.1992 DE 4206295
(43) Veröffentlichungstag der Anmeldung: 01.09.1993
(73) Patentinhaber: SIEMENS AKTIENGESELLSCHAFT, 80333 München (DE)
(72) Erfinder: Arbenz, Dietrich, Dipl.-Ing., W-8000 München 71 (DE); Böttger, Detlev, Dipl.-Ing., W-5840 Schwerte 4 (DE)

(56) Entgegenhaltungen:
- AT-B- 371 963
- US-A- 3 492 433
- US-A- 3 707 605

## Beschreibung

Die Erfindung betrifft eine Telekommunikationsanlage zur Verbindung von Kommunikationsendgeräten, bei der eine die vermittlungstechnische Steuerung und Koordinierung durchführende zentrale Steuereinheit vorhanden ist, die einen Systemspeicher zur Speicherung der Programm-Module und von die Anlagenkonfiguration, verbindungsindividuelle Informationen und teilnehmerseitig einzugebende Kennzeichen betreffende Daten und wenigstens einen Systemprozessor aufweist, dem unter Steuerung eines Betriebssystems die Programm-Module zur Ausführung zugewiesen werden, wobei nach einem erfolglosen Verbindungsaufbau zwischen zwei angeschlossenen Kommunikationsendgeräten am rufenden Endgerät ein Rückrufauftrag in den Systemspeicher einspeicherbar ist, der die zentrale Steuereinheit veranlaßt einen automatischen Verbindungsaufbau zwischen den betreffenden Kommunikationsendgeräten vorzunehmen.

Solche Kommunikationsanlagen dienen zur Verbindung von Endgeräten untereinander und zur Verbindung dieser Endgeräte mit an Kommunikationsnetze, insbesondere an öffentliche Kommunikationsnetze angeschlossenen Endgeräte. Die Kommunikationsanlage besteht im Prinzip aus einer Vielzahl vermittlungstechnischer Funktionseinheiten und einem programmierbaren digitalen Rechnersystem, das diese Funktionseinheiten steuert und alle vermittlungstechnischen Abläufe überwacht. Zu diesem Zweck wird das Rechnersystem mit Informationen über den Betriebszustand der Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben.

In zeitgemäßen programmgesteuerten Kommunikationsanlagen, insbesondere in zeitgemäßen Fernsprechnebenstellenanlagen sind eine Reihe unterschiedlicher Leistungsmerkmale bekannt, die einerseits den Bedienerkomfort steigern und andererseits über die Grundfunktionen der Vermittlung hinausgehende Verbindungsmöglichkeiten bieten. Die eingesetzten Endgeräte weisen in der Regel neben den Zifferntasten zusätzliche Funktionstasten auf, denen durch eine entsprechende betriebstechnische Anweisung unterschiedliche Funktionen zugeordnet werden können. Durch deren Betätigung wird dann beispielsweise unmittelbar die Inanspruchnahme von Leistungsmerkmalen bzw. von bestimmten Diensten ermöglicht. Ein Beispiel für ein solches Leistungsmerkmal ist der sogenannte Rückruf, wobei zwischen dem Besetztzustand und dem Freizustand des angerufenen Teilnehmerendgerätes unterschieden werden kann. Bei "Rückruf im Besetztfall" wird bei besetztem gerufenen Kommunikationsendgerät ein automatischer Rückrufauftrag - z.B. durch Drücken einer entsprechenden Taste im rufenden Kommunikationsendgerät - initialisiert und nach Ubermittlung an die Kommunikationsanlage in dieser beispielsweise in einem dem gerufenen Kommunikationsendgerät zugeordneten dynamischen Gesprächsspeicher gespeichert. Wenn das gewünschte Kommunikationsendgerät frei wird, erhält der ursprünglich rufende Teilnehmer, der einen Rückruf eingetragen hat, einen Anruf. Nach der Entgegennahme des Rufes wird eine Verbindung mit dem gerufenen Kommunikationsendgerät hergestellt. Bei digital an die Kommunikationsanlage angeschlossenen Kommunikationsendgeräten können die Rückrufaufträge optisch an dem jeweiligen Kommunikationsendgerät angezeigt werden.

Eine solche Telekommunikationsanlage mit automatischer Rückruffonktion ist aus US-A-3 707 605 bekannt.

Wenn ein Teilnehmer ein Kommunikationsendgerät anruft, an dem sich niemand meldet, kann er ebenfalls einen automatischen Rückrufauftrag eintragen und die Verbindung beenden. Ist der gewünschte Teilnehmer wieder anwesend und hat er z.B. ein Gespräch über das ursprünglich gerufene Kommunikationsendgerät geführt, erhält der den Rückruf einleitende Teilnehmer einen Anruf. Nach der Entgegennahme dieses Anrufs wird das gewünschte Kommunikationsendgerät unter Heranziehung der gespeicherten Rufnummer des ursprünglich gerufenen Teilnehmers ebenfalls gerufen.

Bei beiden Rückrufvarianten erfolgt also unmittelbar nach Beendigung einer Gesprächsverbindung durch das zunächst ursprünglich vergeblich gerufene Endgerät ein automatischer Verbindungsaufbau zwischen den im Rahmen eines Rückrufauftrages gespeicherten Kommunikationsendgeräten, wobei dann mit dem Melden der Teilnehmer die eigentliche Verbindungsherstellung erfolgt.

Aus US-A-3 492 433 ist die Möglichkeit bekannt einen Rückruf mit vorgebbauer Zeitverzögerung einzuleiten.

Es ist die Aufgabe der Erfindung zu verhindern, daß die Dispositionsfreiheit eines Teilnehmers bei einer die Möglichkeit des automatischen Rückrufs bietenden Kommunikationsanlage, bezüglich eines erneuten Verbindungsaufbaus unangemessen eingeschränkt wird.

Dies wird dadurch erreicht, daß abhängig von der vorliegenden Rückrufauftragsinformation nach dem Erkennen des Übergangs des ursprünglich erfolglos gerufenen Kommunikationsendgerätes in den Ruhezustand die Verbindungsaufbauprozedur für die Rückrufverbindung, durch die zentrale Anlagensteuerung erst nach Ablauf einer vorbestimmten Verzögerungszeit eingeleitet wird.

Es ist davon auszugehen, daß nach einer beendeten Gesprächsverbindung ein Teilnehmer in einer Mehrzahl der Fälle sofort daran anschließend eine weitere Gesprächsverbindung aufbauen möchte, die in unmittelbarem Zusammenhang mit dem vorher beendeten Gespräch stehen wird. Der wesentliche Aspekt der Erfindung ist nun darin zu sehen, daß einem Teilnehmer die Möglichkeit zu solch einer Gesprächsverbindung eingeräumt wird da zunächst der inzwischen von einem anderen Teilnehmer initierte Rückrufauftrag nicht ausgeführt wird. Der Teilnehmer wird also nicht durch eine unmittelbar nachfolgende Gesprächsverbindung, die ihm zu diesem Zeitpunkt nicht genehm ist und die ihm automatisch aufgrund eines Rückrufauftrages durch die Systemsteuerung zugewiesen wird in seinem freien Handeln eingeschränkt. Die Zeit, mit der die im Zusammenhang mit einer Rückrufverbindung stehenden Verbindungsaufbau-Prozeduren verzögert werden, kann an ein bestimmtes Verkehrsverhalten angepaßt werden. Das ist auch abhängig von der an einem bestimmten Arbeitsplatz vorgegebenen Situation. Auch in den Fällen, in denen ein Teilnehmer von sich aus kein sich unmittelbar an das vorhergegangene Gespräch anschließendes weiteres Gespräch führen will wird eine gewisse "Beruhigungszeit" bis zu dem zwangsweise angebotenen nachfolgenden Rückrufgespräch als angenehm empfunden werden. In den Fällen, in denen einem Teilnehmer der vorliegende Auftrag für ein Rückrufgespräch an seinem Endgerät angezeigt wird hat er nun die Möglichkeit, zu entscheiden ob er vor der zeitlich verzögerten Zuweisung dieses Rückrufgespräches nun seinerseits eine Gesprächsverbindung aufbaut oder zunächst das Rückfragegespräch abwartet. Einem Teilnehmer bleibt also durch die erfindungsgemäße Lösung für unterschiedliche Nachfolgesituationen eines vorab geführten Gespräches seine Entscheidungsfreiheit in angemessener Weise erhalten.

Gemäß einer Weiterbildung der Erfindung ist die Verzögerungszeit durch ein mittels eines betriebstechnischen Auftrages einstellbaren Zeitgliedes vorgebbar. Dieses Zeitglied ist softwaremäßig zu realisieren. Die Verzögerungszeit kann generell "systemadministriert" sein d.h. für alle angeschlossenen Endgeräte in gleicher Weise gelten. Es kann aber auch jeweils für einen zu mindest aus einer Gruppe zusammengefaßten Teil der angeschlossenen Kommunikationsendgeräte eine bestimmte Verzögerungszeit vorgegeben werden, wobei diese Verzögerungszeit bei einer Mehrzahl von vorbestimmten Gruppen jeweils unterschiedlich festlegbar ist. Neben einer solchen gruppenabhängigen generellen Verzögerungszeit kann diese aber auch individuell für bestimmte Endgeräte festgelegt werden. Insbesondere bei sogenannten kleinen Kommunikationsanlagen kann diese individuelle Festlegung für jedes Fernsprechendgerät erfolgen. Die jeweils in Frage kommende Verzögerungszeit ist für die betreffenden Endgeräte in einer entsprechend abgespeicherten Zuordnungstabelle vorgegeben.
Gemäß einer Weiterbildung der Erfindung kann die Verzögerungszeit aus einer aufgrund eines entsprechend implementierten Programms vorzunehmenden statistischen Auswertung des gesprächsbezogenen Verhaltens eines Teilnehmers ermittelt werden. Die Verzögerungszeit wird dabei aus den festgestellten Zeitspannen, die bezogen auf ein Endgerät zwischen aufeinanderfolgenden Gesprächsverbindungen liegen, abgeleitet. Die so bestimmte Verzögerungszeit wird dann selbständig durch die Systemsteuerung in die genannte Zuordnungstabelle eingespeichert.

Grundsätzlich wird durch die Tatsache, daß eine Rückrufverbindung erfindungsgemäß nicht mehr zum schnellstmöglichen Zeitpunkt nach Beendigung eines Gesprächs sondern erst nach Ablauf einer bestimmten "Beruhigungszeit" initiiert wird, auch verhindert, daß ein anderer Teilnehmer über einen Rückrufauftrag ohne weiteres auf die Dauer eines geführten Gesprächs schließen kann. Bis zur Durchschaltung der angeforderten Rückrufverbindung könnten nämlich mehrere Gespräche geführt worden sein.

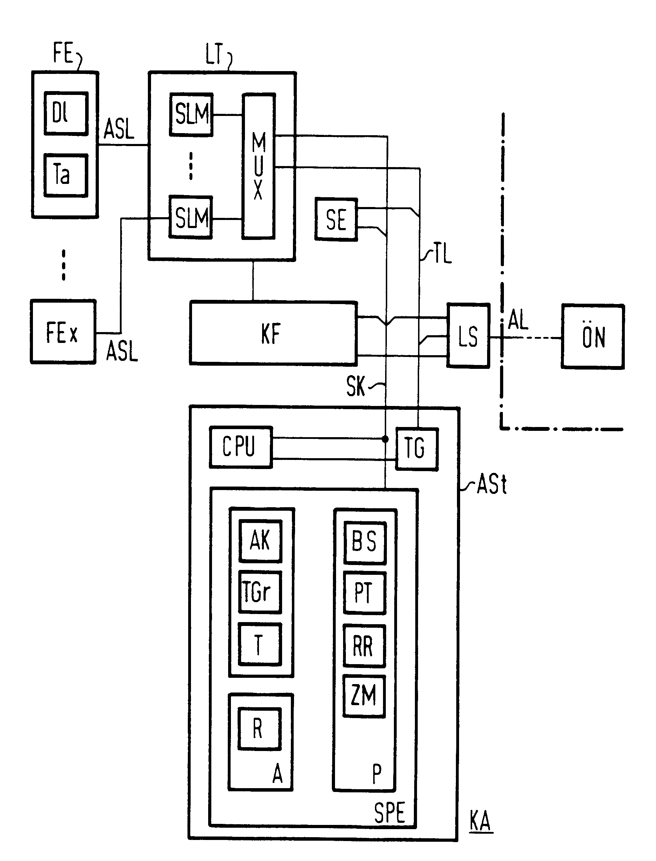

Die Erfindung wird im folgenden anhand eines figürlich dargestellten Ausführungsbeispiels erläutert. In der Figur ist die Struktur einer digitalen Kommunikationsanlage schematisch dargestellt. Es sind lediglich die zum Verständnis der Erfindung notwendigen Komponenten gezeigt.

Zentraler Bestandteil der Kommunikationsanlage KA, die eine sogenannte Nebenstellen-Kommunikationsanlage darstellt, ist ein zentrales Koppelfeld KF, über das Endgeräte - von denen die Fernsprechendgeräte FE und FEx schematisch angedeutet sind - miteinander bzw. mit zu einer öffentlichen Vermittlungsanlage ÖN führenden Leitungen AL verbindbar sind. Das zentrale Koppelfeld KF steht unter dem Steuereinfluß einer zentralen Anlagensteuerung ASt, die neben dem Zentralprozessor CPU eine Speichereinrichtung SPE und eine Takteinheit TG enthält. Der zentrale Prozessor steuert sämtliche Vermittlungsvorgänge und besorgt eine Aufbereitung und Zuteilung der Steuerdaten. Diese Aufgaben können nun auch auf mehrere Prozessoren aufgeteilt werden.

In der Kommunikationsanlage KA sind Leitungsanschlußeinrichtungen, symbolisiert durch die Leitungsschlußeinrichtung LT angeordnet. Diese enthalten jeweils Teilnehmeranschluß-Module SLM. Die Teilnehmeranschluß-Module SLM sind über die Teilnehmeranschlußleitungen ASL mit den Kommunikationsendgeräten FE bis FEx verbunden, wobei prinzipiell zwei unterschiedliche Teilnehmeranschluß-Module SLM vorgesehen sind. Dies sind zum einen Teilnehmeranschluß-Module SLM für den Anschluß analoger Kommunikationsendgeräte FE und zum anderen Teilnehmeranschluß-Module SLM für den Anschluß digitaler Kommunikationsendgeräte FE.

Das Teilnehmeranschluß-Modul SLM für analoge Kommunikationsendgeräte stellt das Bindeglied zwischen den analogen Kommunikationsendgeräten, z.B. Fernsprechendgeräte FE, und der Kommunikationsanlage KA dar. Dieses Teilnehmeranschluß-Modul SLM enthält beispielsweise Einrichtungen für den Anschluß einer vorgegebenen Anzahl von Teilnehmeranschlußleitungen ASL. Jedes Teilnehmeranschluß-Modul SLM ist mit den notwendigen Speise-, Ruf- und Indikationsschaltungen sowie mit Zweidraht-/ Vierdraht-Wandlern und mit Analog/Digital- bzw. Digital/Analog-Wandlern für die Sprachinformationsumsetzung ausgestattet. Die digitalen bzw. digitalisierten Sprachinformationen werden über eine Multiplex-Einrichtung MUX dem z.B. digitalen Koppelfeld KF zugeführt.

Die Teilnehmeranschluß-Einheit -Einheit SLM für den Anschluß von digitalen Kommunikationsendgeräten FE stellt das Bindeglied zwischen ISDN-Kommunikationsendgeräten und der Kommunikationsanlage KA dar. Ein digitales Teilnehmeranschluß-Modul SLM ist für den Anschluß einer ganz bestimmten Anzahl von digitalen Kommunikationsendgeräten vorgesehen. Die Nachrichtenübertragung erfolgt hierbei z.B. über Nachrichtenkanäle und die Signalisierung wird über einen zusätzlichen Kanal übermittelt. Die vom Kommunikationsendgerät FE übermittelten digitalen Sprachinformationen werden ebenfalls über eine Multiplex-Einrichtung MUX zum Koppelfeld KF weitergegeben.

Vermittlungstechnisch gesteuert werden die Leitungsanschluß-Einrichtungen LT von der Anlagensteuerung ASt. Hierbei ist jede Leitungsanschluß-Einrichtung über einen Signalisierungskanal SK mit der Anlagensteuerung verbunden. Über diesen Signalisierungskanal SK werden die Informationen mit Hilfe der bekannten HDLC-Ubermittlungsprozedur ausgetauscht. Die in der zentralen Anlagensteuerung gebildeten Taktsignale werden über eine Taktleitung TL an die Leitungsanschluß-Einrichtungen LT verteilt. Das zur Verfügungstellen der Taktsignale wird durch die Einheit TG symbolisiert.

Der zentrale Prozessor CPU der zentralen Anlagensteuerung ASt hat Zugriff zu dem in der Speichereinrichtung SPE abgelegten Informationen. Sie besteht aus mehreren Speicherteilen, wobei in dem Programmspeicher P das Anlagenbetriebsprogramm BS und die zu ihm bezüglich der Peripherietechnik, der Betriebstechnik, der Sicherheitstechnik und der Vermittlungstechnik gehörenden Programme, symbolisiert durch den Block PT - abgespeichert sind. Mit RR ist ein Programm-Modul bezeichnet, das zur Durchführung von Rückrufprozeduren vorgesehen ist. Das Programm-Modul ZM dient zur Realisierung von z.B. über betriebstechnische Aufträge vorgebbaren Zeitspannen. Damit sind beispielsweise in Verbindung mit der entsprechenden Taktinformationen unterschiedliche Zeiten definierbar, nach deren Ablauf erst die Rückrufprozeduren aktiviert werden.

Die betriebstechnischen Aufträge, können beispielsweise mit einer Betriebseinrichtung eingegeben werden, die über einen standardisierten Bus mit der Anlagensteuerung verbunden ist. Bei kleineren Kommunikationsanlagen kann auch ein Kommunikationsendgerät FE als Betriebsterminal definiert sein.

In dem Speicherteil KD der Speichereinrichtung SPE sind die Kundendaten, wie z.B. die den einzelnen Endgeräten FE zugeteilten Berechtigungen und die Anlagenkundenfiguration AK abgelegt. Bezogen auf die verzögerte Ausführung eines Rückrufes können im Kundendatenspeicher auch diejenigen Kommunikationsendgeräte gruppenweise zusammengefaßt abgespeichert sein für die jeweils eine vorgegebene Verzögerungszeit durch einen betriebstechnischen Auftrag eingegeben wurde. In gleicher Weise könnte darin bei individuell für einzelne Kommunikationsendgeräte FE festzulegende Verzögerungszeiten, die entsprechende Zuordnungstabelle abgespeichert sein.

Daten, die während eines durch ein Kommunikationsendgerät FE initierten Verbindungsaufbau aus der Datenbasis abgefragt werden, können zumindest teilweise in den Arbeitsspeicher A übernommen werden. Dieser Arbeitsspeicher dient unter anderem der Aufnahme von temporären Daten zur Programmablaufsteuerung. Im Zusammenhang mit der erfindungsgemäß vorgesehenen Verzögerung bei der Einleitung von Rückrufaufträgen kann beispielsweise in dem Speicherabschnitt R dieses Arbeitsspeichers A der Rückrufauftrag in Verbindung mit den Anschlußaddressen oer für die Rückrufverbindung vorgesehenen Fernsprechendgeräte bzw. in Verbindung mit den diese Endgeräte bestimmenden Kennzeichen abgespeichert werden.

Der Zugriff zu einer Amtsleitung AL über die,- gegebenenfalls als eine von mehreren - die Kommunikationsanlage KA beispielsweise mit dem öffentlichen Netz ÖN verbunden ist, erfolgt über die Schnittstelle LS. Diese Schnittstelle beinhaltet beispielsweise einen ISDN-Teil der z.B. als standardisierte So-Schnittstelle ausgebildet sein kann. Die Peripherie der Kommunikationsanlage KA wird ergänzt durch eine Signalisierungseinheit SE, die zur Zeichenversorgung der Kommunikationsanlage vorhanden ist.

Es sei angenommen, daß von einem rufenden Fernsprechendgerät FE ein Verbindungsaufbau zu einem gerufenen Fernsprechendgerät FEx eingeleitet wird. Nach der akustischen Anzeige des Verbindungswunsches am gerufenen Fernsprechendgerät FEx kommt die Verbindung jedoch nicht zustande, da der betreffende Teilnehmer des gerufenen Fernsprechendgerätes beispielsweise abwesend ist. Ist das gewünschte Endgerät besetzt, so ist gleichfalls eine Verbindung nicht möglich. Ausgehend vom zuletzt genannten Fall wird nun angenommen, daß am rufenden Fernsprechendgerät FE das Leistungsmerkmal "Rückruf" - beispielsweise durch Drücken einer hierfür vorgesehenen Rückruf-Taste - initialisiert wird. Ein solches Fernsprechendgerät weist, wie in der Figur angedeutet ist, ein Display Dl und eine Tastatur Ta auf. Diese Tastatur Ta enthält die nicht im einzelnen dargestellten nummerischen Tasten für die Eingabe von Wahlinformationen und weitere ebenfalls nicht dargstellte Tasten für die Eingabe von Zusatzfunktionen. Durch die Betätigung der vorhandenen Funktionstasten können beispielsweise mittels des Anlagenbetriebsprogramms realisierbare Leistungsmerkmale aktiviert werden. Der von einem Teilnehmer z.B. durch eine Tastenbetätigung eingegebene Rückrufwunsch wird der Kommunikationsanlage KA über die Teilnehmeranschlußleitung ASL signalisiert und über das jeweilige Teilnehmeranschluß-Modul SLM bzw. die Multiplex-Einrichtung MUX an die zentrale Anlagensteuerung ASt übermittelt. Durch die Steuerung werden beispielsweise bei Nichtzustandekommen einer Sprechverbindung in dem Speicherabschnitt R des Arbeitsspeichers A Kennzeichen bzw. Anschlußadressen eingegeben, die die beteiligten Fernsprechendgeräte FE bzw. FEx bestimmen. Diese eingeschriebenen Informationen werden dann nach Beendigung der Gesprächsverbindung d.h. nach dem Auflegen des Handapparates oder nach einer diesem Auflegen äquivalenten Handlung für den Aufbau einer Verbindung zwischen dem vergeblich gerufenen Fernsprechendgerät FEx mit dem ursprünglich rufenden Endgerät FE herangezogen. Bei der Eingabe eines Rückrufauftrages im Freifall trifft dies in gleicher Weise bei der Beendigung des nächsten von diesem Endgerät aus geführten Gespräches zu.

Zur Realisierung von leistungsmerkmalspezifischen Steuerprozeduren beinhaltet die Steuerung einzelne Programmsteuerungen die auf; die in den entsprechenden Modulen der Speichereinrichtung SPE enthaltenen Steuerdaten zugreifen. Im erfindungsgemäßen Falle betrifft dies die Module RR und ZM, wobei letzteres bei der Ausführung eines Rückrufauftrages bestimmte Zeitinformationen liefert. Dies erfolgt im Zusammenspiel mit dem zentralen Taktgeber TG und in Abhängigkeit von den gegebenenfalls im Kundendatenspeicher enthaltenen Informationen. Grundsätzlich wird ein Rückrufauftrag nicht zum frühestmöglichen Zeitpunkt nach dem Erkennen des Übergangs des ursprünglich erfolglos gerufenen Kommunikationsendgerätes in den Ruhezustand ausgeführt, sondern dies erfolgt erst nach dem Ablauf einer bestimmten Verzögerungszeit. Diese kann eine einheitlich für die Kommunikationsanlage vorgegebene Verzögerungszeit sein. Es ist jedoch auch möglich, für einzelne Teilnehmergruppen, die z.B. im Kundendatenspeicher in dem Abschnitt TGr jeweils für sich abgespeichert sind eine unterschiedliche Verzögerungszeit zu definieren. Es ist grundsätzlich auch denkbar für einzelne Fernsprechendgeräte eine von der generellen Verzögerungszeit abweichende Verzögerungszeit vorzusehen. In einer abgespeicherten Zuordnungstabelle T kann im Kundendatenspeicher einzelnen Endgeräten die jeweils gewünschte Verzögerungszeit zugeordnet werden. Beim Aufbau einer Rückrufverbindung prüft die Steuerung, welche Verzögerungszeiten jeweils zu berücksichtigen sind. Diese jeweilige Verzögerungszeit wird dann durch die Steuerung im Zusammenspiel mit dem Zeit-Modul ZM und dem zentralen Taktgeber TG bei der verzögerten Ausführung eines Rückrufauftrages zugrunde gelegt.

Es ist auch möglich die Verzögerungszeit in Abhängigkeit vom Verkehrsverhalten eines Teilnehmers automatisch zu bestimmen. Zu diesem Zweck werden in einer statistischen Auswertung bezogen auf eine vorbestimmte Anzahl von Gesprächen die zwischen ihnen liegenden Zeitspannen ermittelt. Diese bilden dann die Grundlage für die nach sinnvollen Algorithmen erfolgende Ermittlung einer Verzögerungszeit, die automatisch bei der Herstellung einer Rückrufverbindung berücksichtigt wird.

Mit der variablen Einstellung der Verzögerungszeit für die Initialisierung einer Rückrufverbindung besteht auch die Möglichkeit diesbezügliche Wünsche von Teilnehmern zu berücksichtigen. Eine sinnvoll gewählte Verzögerungszeit kann bis zu 2 Minuten betragen. Dies bietet für den Teilnehmer die Chance ein von ihm gewünschtes nachfolgendes Gespräch aufzubauen bzw. andere gesprächsbezogene Tätigkeiten unmittelbar danach ungestört auszuführen. Andererseits besteht dann gleichzeitig eine gewisse Gewähr dafür, daß der Teilnehmer am jeweiligen Arbeitsplatz noch anwesend ist.

Bis zur automatischen Zuweisung einer Rückrufverbindung können, wie bereits erläutert, durch einen Teilnehmer grundsätzlich mehrere Gespräche geführt worden sein. Es ist deshalb für einen anderen Teilnehmer nicht mehr möglich, die Dauer eines Einzelgesprächs über einen Rückrufauftrag festzustellen. Bei einer unverzögerten Ausführung eines Rückrufauftrages besteht diese Kontrollmöglichkeit. Eine solche Überprüfung wäre insbesondere in den Fällen, in denen der Belegtzustand eines Endgerätes an mindestens einem weiteren Endgerät optisch angezeigt wird, durch den betreffenden Teilnehmer in einfacher Weise durchzuführen.

## Patentansprüche

1. Telekommunikationsanlage zur Verbindung von KommunikationsEndgeräten, bei der eine die vermittlungstechnische Steuerung und Koordinierung durchführende zentrale Anlagensteuerung (ASt) vorhanden ist, die einen Systemspeicher (SPE) zur Speicherung der Programmmodule und von die Anlagenkonfiguration, verbindungsindividuelle Informationen und teilnehmerseitig einzugebende Kennzeichen betreffende Daten und wenigstens einen Systemprozessor (CPU) aufweist, dem unter Steuerung eines Betriebssystems die Programmodule zur Ausführung zugewiesen werden, wobei nach einem erfolglosen Verbindungsaufbau zwischen zwei angeschlossenen Kommunikationsendgeräten am rufenden Endgerät ein Rückrufauftrag in den Systemspeicher einspeicherbar ist, der die zentrale Anlagensteuerung veranlaßt einen automatischen Verbindungsaufbau zwischen den betreffenden Kommunikationsendgeräten vorzunehmen,
**dadurch gekennzeichnet,**
daß die Systemsteuerung derart ausgebildet ist, daß abhängig von der vorliegenden Rückrufauftragsinformation nach dem Erkennen des Übergangs des ursprünglich erfolglos gerufenen Kommunikationsendgerätes in den Ruhezustand die Verbindungsaufbauprozedur für die Rückrufverbindung durch die zentrale Anlagensteuerung erst nach Ablauf einer vorbestimmten Verzögerungszeit eingeleitet wird.

2. Telekommunikationsanlage nach Anspruch 1,
**dadurch gekennzeichnet,**
daß sie derart ausgestaltet ist, daß die Verzögerungszeit durch ein jeweils auf einen von mehreren unterschiedlichen Zeitbereichen mittels eines betriebstechnischen Auftrages einstellbaren Zeitgliedes (ZM,TG) vorgebbar ist.

3. Telekommunikationsanlage nach Anspruch 2,
**dadurch gekennzeichnet,**
daß sie derart ausgestaltet ist, daß jeweils für einen zu mindestens einer Gruppe (TGr) zusammengefaßten Teil der angeschlossenen Kommunikationsgeräte eine bestimmte Verzögerungszeit vorgebbar ist, daß diese Verzögerungszeit für eine Mehrzahl von derartigen Gruppen unterschiedlich festlegbar ist.

4. Telekommunikationsanlage nach Anspruch 2 bzw. 3,
**dadurch gekennzeichnet,**
daß sie derart ausgestaltet ist, daß für bestimmte, auch einer Gruppe zugeordneten Kommunikationsendgeräte eine individuell festzulegende Verzögerungszeit in einer entsprechend abgespeicherten Zuordnungstabelle (T) vorgegeben ist.

5. Telekommunikationsanlage nach Anspruch 4,
**dadurch gekennzeichnet,**
daß sie derart ausgestaltet ist, daß, bezogen auf jeweils ein Kommunikationsendgerät, die Verzögerungszeit aus einer statistischen Auswertung der zwischen aufeinanderfolgenden Gespächsverbindungen liegenden Zeitspanne abgeleitet wird und daß diese abgeleitete Zeit selbstätig durch die Anlagensteuerung als maßgebende Verzögerungszeit wirksam vorgegeben wird.

## Claims

1. Telecommunications system for the connection of communications terminals, in which a central system controller (ASt) is present which carries out the switching control and co-ordination and has a system memory (SPE) for storage of the program modules and of data which relate to the system configuration, connection-specific information and identification features which must be entered at the subscriber end, and has at least one system processor (CPU) to which the program modules are allocated for execution under the control of an operating system, in which case it is possible to store a call-back order in the system memory at the calling terminal after an unsuccessful attempt to set up a call between two connected communications terminals, which call-back order causes the central system controller to carry out an automatic call setting-up procedure between the relevant communications terminals, characterized in that the system controller is designed in such a manner that, depending on the call-back order information that is present and after the identification of the transition of the originally unsuccessfully called communications terminal to the quiescent state, the call setting-up procedure for the call-back connection is not initiated by the central system controller until a predetermined delay time has passed.

2. Telecommunications system according to Claim 1, characterized in that this system is configured in such a way that the delay time can be preset by means of a timing element (ZM, TG) which can in each case be set to one of a plurality of different time periods, by means of an operating order.

3. Telecommunications system according to Claim 2, characterized in that this system is configured in such a way that a specific delay time can be preset in each case for some of the connected communications terminals which are combined to form at least one group (TGr), in that this delay time can be defined differently for a plurality of such groups.

4. Telecommunications system according to Claim 2 or 3, characterized in that this system is configured in such a way that a delay time which can be defined specifically is preset in an appropriately stored assignment table (T) for specific communications terminals which can also be assigned to a group.

5. Telecommunications system according to Claim 4, characterized in that this system is configured in such a way that, with respect to in each case one communications terminal, the delay time is derived from a statistical evaluation of the time interval which passes between successive call connections, and in that this derived time is effectively preset automatically, by the system controller, as a significant delay time.

## Revendications

1. Système de télécommunication qui est destiné à relier des terminaux de communication et dans lequel il existe une unité de commande (ASt) centrale qui effectue la commande et la coordination de commutation et qui comporte une mémoire de système (SPE), destinée à mémoriser les modules de programmes ainsi que des informations de configuration de système propres à chaque liaison et des données concernant des identificateurs à entrer côté abonné, et au moins un processeur de système (CPU) auquel la commande d'un système d'exploitation attribue les modules de programmes pour leur exécution, système dans lequel, après l'échec d'un établissement de liaison entre deux terminaux de communication raccordés, une tâche de rappel peut être enregistrée au niveau du terminal appelant dans la mémoire de système qui oblige l'unité de commande centrale à effectuer un établissement de liaison automatique entre les terminaux de communication concernés,
caractérisé par le fait que
la commande de système est conçue de sorte que, en fonction de l'information de tâche de rappel présente, après la détection du passage dans l'état de repos du terminal de communication initialement appelé sans succès, la procédure d'établissement de communication pour la liaison de rappel n'est déclenchée par la commande de système centrale qu'après l'expiration d'un délai prédéterminé.

2. Système de télécommunication selon la revendication 1,
caractérisé par le fait que
il est conçu de sorte que le délai peut être prescrit par un élément temporisateur (ZM, TG) réglable au moyen d'une tâche d'exploitation sur un parmi plusieurs laps de temps différents.

3. Système de télécommunication selon la revendication 2,
caractérisé par le fait que
il est conçu de sorte qu'un certain délai peut être prescrit à chaque fois pour une partie, réunie en au moins un groupe (TGr), des terminaux de communication raccordés et que ce délai peut être spécifié, à chaque fois différent, pour plusieurs groupes de ce type.

4. Système de télécommunication selon la revendication 2 ou 3,
caractérisé par le fait que
il est conçu de sorte qu'un délai à spécifier individuellement est prescrit dans un tableau d'association (T) mémorisé en conséquence pour certains terminaux de communication qui sont aussi associés à un groupe.

5. Système de télécommunication selon la revendication 4,
caractérisé par le fait que
il est conçu de sorte que, par rapport à un certain terminal de communication, le délai est déduit d'une évaluation statistique des laps de temps entre des liaisons de conversations successives et que ce délai déduit est efficacement prescrit automatiquement par la commande de système comme délai déterminant.
